# EUROPEAN PATENT APPLICATION

(11) **EP 4 202 976 A1**
(43) Date of publication of application: **28.06.2023**
(21) Application number: 21216631.8
(22) Date of filing: 21.12.2021
(51) Int. Cl.: H01J 49/00

(54) **FAILURE DETECTION OF SAMPLE INTRODUCTION SYSTEMS**

(71) Applicant: Thermo Fisher Scientific (Bremen) GmbH, 28199 Bremen (DE)
(72) Inventor: GUZZONATO, Antonella, 28199 Bremen (DE); MISCHA, Jahn, 28199 Bremen (DE)
(74) Representative: Boult Wade Tennant LLP

(57) **Abstract**

A method of operating a sample introduction system (200) of an inductively coupled plasma analytical instrument (300), the method comprising applying a trained classifier to instrument data, obtained from the analytical instrument, during operation of the analytical instrument, to detect whether the sample introduction system (200) is operating in a normal state or in a failure state. The method further comprises activating an error procedure in the event that the sample introduction system (200) is operating in a failure state. The instrument data comprises signal data obtained from an analytical measurement made by the analytical instrument (300). The trained classifier is trained using a training data set comprising instrument data corresponding to the normal state of the sample introduction system (200).

## Description

### Field of the disclosure

The disclosure relates to the field of sample introduction systems for inductively coupled plasma analytical instruments.

### Background

Spectrometers are used to analyse constituent elements of a sample. Inductively coupled plasma (ICP) spectrometers (for example, inductively coupled plasma mass spectrometers (ICP-MS) or inductively coupled plasma optical emission spectrometers (ICP-OES)) are capable of detecting elements at extremely low concentrations, as low as milligram or nanogram levels per litre. The inductively coupled plasma is an ionization source that fully decomposes a sample into its constituent elements. Those elements are transformed into ions for analysis. ICP spectrometers preferably use a gas sample, ionising it using an inductively coupled plasma torch. As most samples are initially in liquid form, the sample introduction system is usually required to convert the liquid sample into an aerosol for introduction into the plasma. An aerosol (a finely dispersed liquid mist or spray suspended in a gas) provides a uniform sample introduction, key to both a reliable signal and to stable operation of the plasma.

A nebulizer may be used to convert the liquid sample to a fine spray, commonly using a gas (pneumatic nebulizers) or sound (ultrasonic nebulizers) as the driving force. A spray chamber may then be used to remove larger droplets from the mist produced by the nebulizer.

Sample introduction for analytical instruments, such as spectrometers, experience issues or malfunctions that are typically discovered after the fact. Detecting these issues after the malfunction has occurred at the very least results in lost acquisition time and can cause serious, sometimes irreparable, damage to components, leading to further downtime. Malfunctions and other such issues are usually detected either by visual evaluation from an operator that that is physically in close proximity to the instrument, or by the triggering of various interlocks of the system. An example of such an interlock may be an optical drain sensor that detects the flow of fluid through the drain tube and, if no flow is detected, stops the sample delivery to the plasma. Another example is a plasma off interlock, which stops sample delivery if the plasma switches off. Interlocks may also be triggered to stop sample delivery if the nebulizer flow not reached (when the desired gas flow cannot be reached in the nebulizer either because of too high backpressure or because the gas source is not at a sufficient pressure) or if the peristaltic pump speed is not reached (if something is impeding the free rotation of the peristaltic pump). These methods are prone to user error or variation, for example if interlocks depend on measurement conditions that vary between users. This in turn can lead to malfunctions being misidentified which can result in needless shutting down of the system in the case of non-existent malfunctions being erroneously identified, or further equipment damage in the case of true malfunctions being missed or identified too slowly.

ICP spectrometers may experience issues with the sample introduction system relating to the sample tubing, peristaltic pump, nebulizer, spray chamber, plasma torch, or other component. For example, the sample tubing may experience a leak, the nebulizer may become clogged, or the flow gauge may read an incorrect nebulizer flow. Detecting such errors by conventional means is unreliable, and even when the errors are detected correctly it is usually too late to prevent lost acquisition time, and possibly damage to the sample introduction system.

### Summary of the disclosure

An object of this disclosure is to provide a reliable method of detecting issues with the sample introduction system, that can detect issues as they occur by using data that is normally acquired during use of an analytical instrument.

There is provided a system configured to receive instrument data acquired during normal use of an analytical instrument comprising a sample introduction system, and to use the instrument data to determine whether the sample introduction system is operating in a normal state or in a failure state. The instrument data may comprise signal data such as spectrometric signals that are representative of a property of the inductively coupled plasma or of a property of the inductively coupled plasma source. The instrument data may comprise sensor data that is indicative of an instrument state or sample introduction system state.

In this way, issues with the sample introduction system may be detected reliably, as they occur in real time. The signal data that is output by the analytical instrument is used to determine whether the sample introduction system is operating in a normal or failure state. The result is a failure detection method that is unaffected by user judgment or user settings, and does not require a user to be present. The issues can be detected as soon as they begin, and therefore fixed quickly before they become worse or sample material is irreversibly lost or destroyed.

According to a first aspect of this disclosure, a method of operating a sample introduction system of an inductively coupled plasma analytical instrument is provided. The method comprises applying a trained classifier to instrument data, obtained from the analytical instrument during operation of the analytical instrument, to detect whether the sample introduction system is operating in a normal state or in a failure state. The method further comprises activating an error procedure in the event that the sample introduction system is operating in a failure state. The instrument data comprises signal data obtained from an analytical measurement made by the analytical instrument. The trained classifier is trained using a training data set comprising instrument data corresponding to the normal state of the sample introduction system.

The normal state may comprise a non-failure state.

In an embodiment, the sample introduction system may comprise one or more sensors, and the instrument data may further comprise sensor data comprising outputs from the one or more sensors.

In an embodiment, the signal data may comprise data that is representative of a property of the inductively coupled plasma.

In an embodiment, the signal data may comprise data that is representative of an amount of a first species present in the plasma.

In an embodiment, the signal data may comprise data that is a ratio of the amount of the first species present in the plasma and a second species present in the plasma.

In an embodiment, the signal data may comprise a ratio of the amount of Argon in the plasma and the amount of Nitrogen in the plasma.

In an embodiment, the data that is representative of an amount of a species in the plasma may comprise a recorded intensity of the species emissions in the plasma.

For example, the signal data may comprise a ratio of a recorded intensity of Argon emissions in the plasma and a recorded intensity of Nitrogen emissions in the plasma.

In an embodiment, the signal data may comprise spectrometric data.

In an embodiment, the training data set may further comprise instrument data corresponding to the failure state of the sample introduction system.

In an embodiment, the sensor data may comprise data obtained from at least one of a nebulizer backpressure sensor, a nebulizer flow sensor, a cooling gas flow sensor, a radio frequency plasma power sensor, and a peristaltic pump speed sensor.

In an embodiment the trained classifier may comprise a trained machine learning algorithm.

In an embodiment the trained classifier may comprise a neural network.

In an embodiment, a first activation function of the trained classifier may comprise a rectified linear function.

In an embodiment, a second activation function of the trained classifier may comprise a softmax function.

In an embodiment, a loss function of the trained classifier may comprise a categorical cross entropy function.

In an embodiment, the error procedure may comprise notifying the failure state to a user.

In an embodiment, the error procedure may comprise placing the sample introduction system and/or analytical instrument into a safe mode.

In an embodiment, placing the sample introduction system into a safe mode may comprise any of stopping the sample introduction system, stopping one or more components of the sample introduction system, and preventing a sample from entering the nebulizer of the sample introduction system.

In an embodiment, the method of any preceding embodiment may further comprise generating the trained classifier by performing Adam optimization on an initial classifier using the training data set.

In an embodiment, an apparatus is arranged to carry out a method according to the first aspect above or any of the foregoing embodiments or suitable combinations thereof.

In an embodiment, there is a computer program which, when executed by a processor, causes the processor to carry out a method according to the first aspect above or any of the foregoing embodiments or suitable combinations thereof.

In an embodiment, there is a computer-readable medium storing a computer program which, when executed by a processor, causes the processor to carry out a method according to the first aspect above or any of the foregoing embodiments or suitable combinations thereof.

There may be a system comprising a processor and the computer-readable medium of the above embodiment, wherein the computer-readable medium is communicatively coupled to the processor. Computer program code may be stored on the computer-readable medium, that is executable by the processor and that, when executed by the processor, causes the processor to perform the method of the first aspect or any of the foregoing embodiments or suitable combinations thereof. The system may further comprise a memory communicatively coupled to the processor for storing data.

In a second aspect, a sample introduction system for an inductively coupled plasma analytical instrument is provided, wherein the sample introduction system comprises a controller configured to apply a trained classifier to instrument data, obtained from the analytical instrument, during operation of the analytical instrument, to detect whether the sample introduction system is operating in a normal state or in a failure state. The sample introduction system is further configured to activate an error procedure in the event that the sample introduction system is operating in a failure state. The instrument data comprises signal data obtained from an analytical measurement made by the analytical instrument. The trained classifier is trained using a training data set comprising instrument data corresponding to the normal state of the sample introduction system and the failure state of the sample introduction system.

The sample introduction system may be configured to carry out the method of any of the foregoing embodiments or suitable combinations thereof.

In a third aspect, a sample introduction system for an inductively coupled plasma analytical instrument is provided, wherein the sample introduction system comprises a controller configured to receive instrument data from the analytical instrument, wherein the instrument data comprises signal data obtained from an analytical measurement made by the analytical instrument. The sample introduction system is further configured to determine the sample introduction system is in a failure state by analysing the received instrument data. The sample introduction system is further configured to notify a user of the determined failure state.

In a fourth aspect, a sample introduction system for an inductively coupled plasma analytical instrument is provided, wherein the sample introduction system comprises a controller configured to identify a failure state of the sample introduction system by analysing the received instrument data. In response to the identification of the failure state, the sample introduction system is further configured to switch the sample introduction system to a safe mode.

### Brief description of the drawings

A specific embodiment of the disclosure will now be described, by way of example only, with reference to the accompanying drawings in which:
Figure 1 shows a schematic diagram of an example of a computer system that may be part of an analytical instrument.
Figure 2 shows a schematic diagram of a sample introduction systems for an inductively coupled plasma analytical instrument.
Figure 3 shows a schematic diagram of a sample introduction systems for an inductively coupled plasma optical emission spectrometer.
Figure 4 shows a flow chart illustrating a method of operating a sample introduction system of an analytical instrument in accordance with an embodiment of the present disclosure.
Figure 5 shows a block diagram illustrating a sample introduction system of an analytical instrument in accordance with an embodiment of the present disclosure.
Figure 6 shows a flow chart illustrating a method of training a trained classifier in accordance with an embodiment of the present disclosure.
Figure 7 shows a flow chart illustrating a method of training a trained classifier in accordance with an embodiment of the present disclosure.
Figure 8 shows model accuracy (Fig. 8A) and model loss (Fig. 8B) plotted against epoch number for a first trained classifier in accordance with an embodiment of the present disclosure.

### Detailed description

In the description that follows and in the figures, certain embodiments of the invention are described. However, it will be appreciated that the invention is not limited to the embodiments that are described and that some embodiments may not include all of the features that are described below. It will be evident, however, that various modifications and changes may be made herein without departing from the broader spirit and scope of the invention as set forth in the appended claims.

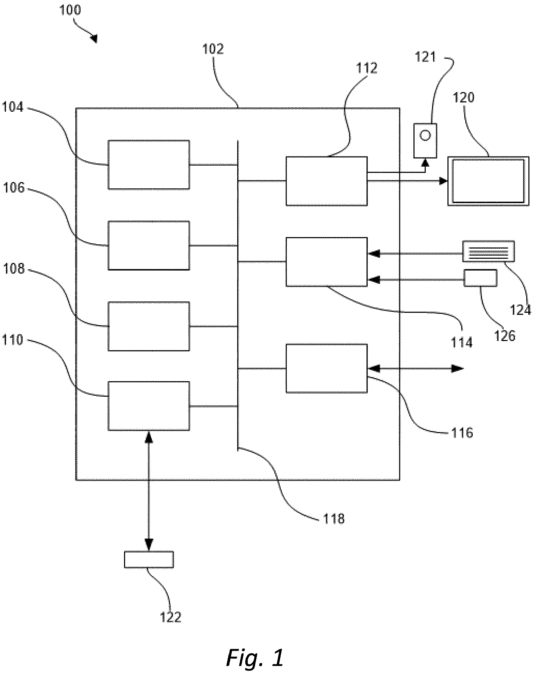

Figure 1 schematically illustrates an example of a computer system 100. The system 100 comprises a computer 102. The computer 102 comprises: a storage medium 104, a memory 106, a processor 108, an interface 110, a user output interface 112, a user input interface 114 and a network interface 116, which are all linked together over one or more communication buses 118.

The storage medium 104 may be any form of non-volatile data storage device such as one or more of a hard disk drive, a magnetic disc, an optical disc, a ROM, etc. The storage medium 104 may store an operating system for the processor 108 to execute in order for the computer 102 to function. The storage medium 104 may also store one or more computer programs (or software or instructions or code).

The memory 106 may be any random access memory (storage unit or volatile storage medium) suitable for storing data and/or computer programs (or software or instructions or code).

The processor 108 may be any data processing unit suitable for executing one or more computer programs (such as those stored on the storage medium 104 and/or in the memory 106), some of which may be computer programs according to embodiments of the invention or computer programs that, when executed by the processor 108, cause the processor 108 to carry out a method according to an embodiment of the invention and configure the system 100 to be a system according to an embodiment of the invention. The processor 108 may comprise a single data processing unit or multiple data processing units operating in parallel or in cooperation with each other. The processor 108, in carrying out data processing operations for embodiments of the invention, may store data to and/or read data from the storage medium 104 and/or the memory 106.

The interface 110 may be any unit for providing an interface to a device 122 external to, or removable from, the computer 102. The device 122 may be a data storage device, for example, one or more of an optical disc, a magnetic disc, a solid-state-storage device, etc.

The device 122 may have processing capabilities - for example, the device may be a smart card. The interface 110 may therefore access data from, or provide data to, or interface with, the device 122 in accordance with one or more commands that it receives from the processor 108.

The user input interface 114 is arranged to receive input from a user, or operator, of the system 100. The user may provide this input via one or more input devices of the system 100, such as a mouse (or other pointing device) 126 and/or a keyboard 124, that are connected to, or in communication with, the user input interface 114. However, it will be appreciated that the user may provide input to the computer 102 via one or more additional or alternative input devices (such as a touch screen). The computer 102 may store the input received from the input devices via the user input interface 114 in the memory 106 for the processor 108 to subsequently access and process, or may pass it straight to the processor 108, so that the processor 108 can respond to the user input accordingly.

The user output interface 112 is arranged to provide a graphical/visual and/or audio output to a user, or operator, of the system 100. As such, the processor 108 may be arranged to instruct the user output interface 112 to form an image/video signal representing a desired graphical output, and to provide this signal to a monitor (or screen or display unit) 120 of the system 100 that is connected to the user output interface 112. Additionally, or alternatively, the processor 108 may be arranged to instruct the user output interface 112 to form an audio signal representing a desired audio output, and to provide this signal to one or more speakers 121 of the system 100 that is connected to the user output interface 112.

Finally, the network interface 116 provides functionality for the computer 102 to download data from and/or upload data to one or more data communication networks.

It will be appreciated that the architecture of the system 100 illustrated in figure 1 and described above is merely exemplary and that other computer systems 100 with different architectures (for example with fewer components than shown in figure 1 or with additional and/or alternative components than shown in figure 1) may be used in embodiments of the invention. As examples, the computer system 100 could comprise one or more of: a personal computer; a server computer; a mobile telephone; a tablet; a laptop; a television set; a set top box; a games console; other mobile devices or consumer electronics devices; etc.

A sample introduction system for an inductively coupled plasma (ICP) spectrometer may comprise a nebulizer for converting a liquid sample into a fine spray. The ICP spectrometer may further comprise a spray chamber for removing larger droplets from the spray.

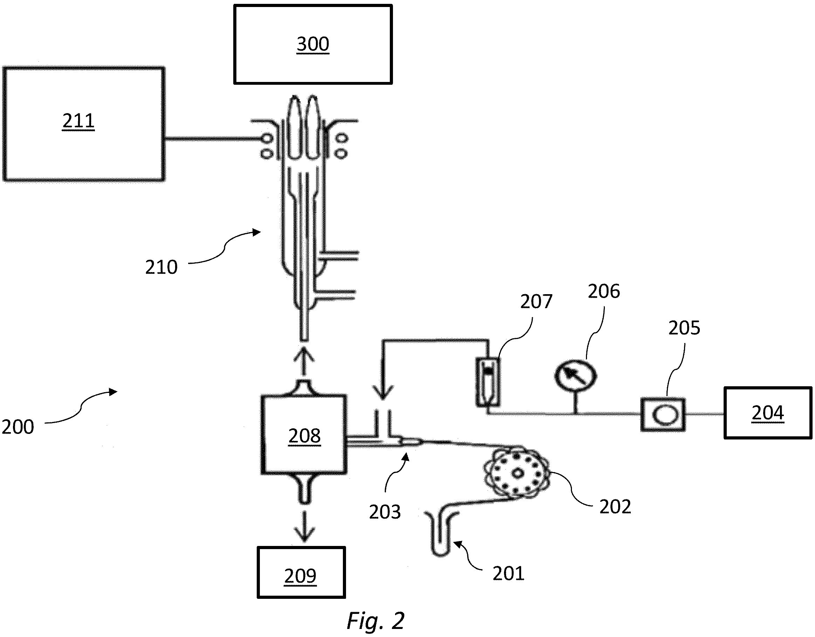

With reference to Figure 2, an exemplary arrangement of a sample introduction system 200 for an ICP spectrometer sample is shown. A sample 201 is introduced, and is directed to the nebulizer 203 via a pump 202 such as a peristaltic pump. The nebulizer 203 converts the liquid sample to a fine spray. Gas, for example Argon, is supplied to the nebulizer 203 from the nebulizer gas supply 204, via a pressure regulator 205, a pressure gauge 206 and a flow gauge 207. The gas enters the nebulizer 203 at high pressure via an orifice. The gas in the nebulizer is at a lower pressure, and so the high pressure gas entering the nebulizer forms a gas jet. This pushes lower pressure gas away from the orifice, creating a gas current and drawing some lower pressure gas into the higher pressure gas jet, which in turn creates suction at the orifice. The suction is used to draw the liquid sample into the gas jet in small droplets.

The spray is directed into a spray chamber 208, which removes larger droplets to the drain 209. Smaller droplets are directed to the plasma torch 210. A radio frequency (RF) power supply 211 is used to generate the plasma. The sample is ionised by the plasma, and the ionized sample is then directed towards analysis equipment 300.

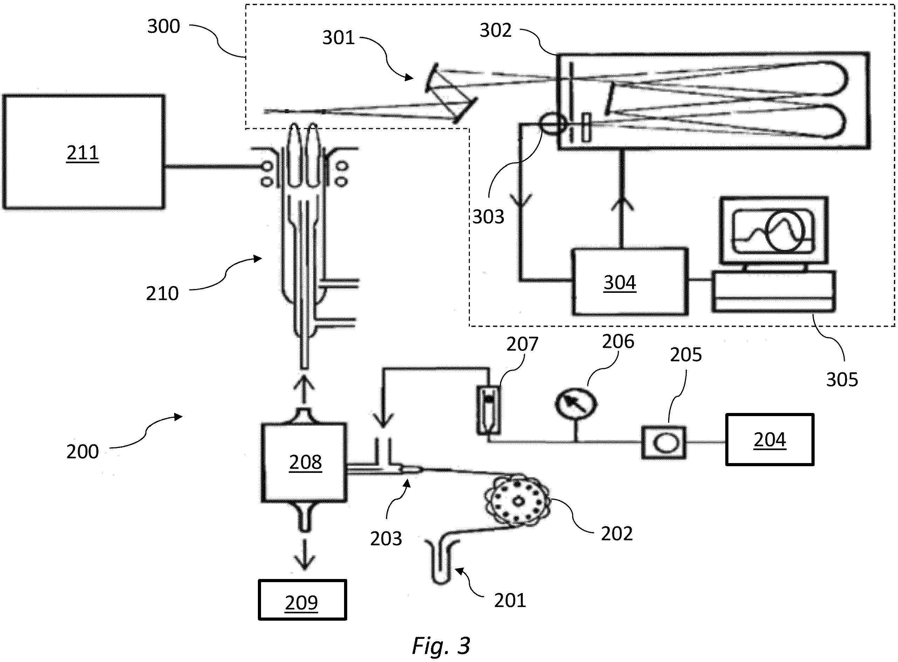

Analysis equipment 300 may, for example, comprise a mass spectrometer or an optical emission spectrometer. An ICP Mass Spectrometer (MS) separates the ions according to their mass-to-charge ratio. The signal data that is output by the analytical equipment comprises a mass spectrum where the intensity of each signal is proportional to the concentration of each component of the sample. An ICP Optical Emission Spectrometer (OES, also referred to as an Atomic Emission Spectrometer, AES) uses the plasma to generate excited atoms and ions that emit electromagnetic radiation at characteristic wavelengths for each element. The intensity of the emission at a particular characteristic wavelength is proportional to the concentration of the associated element. The signal data may be in the form of subarrays and full frames for OES instruments, and single and survey scans for MS instruments. With reference to Figure 3, an example of the analysis equipment 300 comprises transfer optics 301, a monochromator 302, an echelle grating, a photo-multiplier 303, signal processing electronics 304, and a computer 305 (such as the computer system 100 described above).

It will be appreciated that the sample introduction system may experience faults (or failures). Such faults may occur during and/or prior to operation. Faults may be the result of factors including any of: equipment mishandling, using the sample introduction systems outside of its specified parameters (or design), wear (or degradation) of components of the system, environmental factors (such as external temperature and/or humidity), sample characteristics (such as density or suspended particles), etc. Faults may occur in relation to particular parts (or components) of the system such as any of the sample tubing, peristaltic pump, nebulizer, spray chamber, plasma torch, or other component. For example, a nebulizer flow may deviate from what is expected, or the nebulizer may become clogged. The sample tube or peristaltic pump tube may leak or become damaged.

The presence of a fault in the sample introduction system may typically result (or cause) the sample introduction system to be in a failure state. In a failure state the sample introduction system is unable to operate correctly. This can result in the sample introduction system not operating (or introducing any sample). More, typically, the failure state results in the sample introduction system incorrectly introducing the sample. An example of such incorrect sample introduction may include the peristaltic pump tubing leading to the plasma becoming damaged, which may cause part of the sample to leak and cause damage to instruments or people. A smaller amount of sample will be delivered to the source than expected, leading to mistakes in the estimation of the analyte's concentration. Any damage to the pump tubing may also allow too much air to enter the nebulizer flow, such that the plasma impedance falls out of the operational boundaries of the radio frequency generator, causing an interlock to be triggered that turns off the plasma. Another example of incorrect sample introduction may include the peristaltic tubing leading away from the spray chamber (drain) becoming damaged such that the liquid in the spray chamber is not completely removed. Over time this may result in the spray chamber becoming flooded, and the drain liquid reaching (and extinguishing) the plasma torch. Another example is the nebulizer becoming clogged such that the sample is not nebulized and therefore not delivered properly.

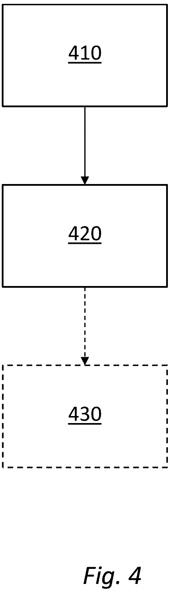

With reference to Figure 4, a method 400 of operating a sample introduction system of an inductively coupled plasma analytical instrument according to an embodiment of the present disclosure uses instrument data from the analytical instrument to detect a failure of the sample introduction system. The method 400 may be carried out by a suitable computer system, such as the system 305. The method comprises obtaining the instrument data at step 410 and analysing the obtained instrument data at step 420. Optionally, the method comprises a step 430 of activating an error procedure in an event that the sample instruction system is operating in a failure state. Step 430 may comprise outputting a result of the analysis of the instrument data. Step 430 may comprise taking an action based on the output.

The instrument data obtained at step 410 may comprise signal data that is output by the analytical instrument when performing a measurement. For example, the signal data may comprise optical emission signals. The signal data may be sample agnostic. The signal data may comprise spectrometric signals that are representative of a property of the inductively coupled plasma or of the excitation source or inductively coupled plasma source. For example the signal data may comprise (or represent) a quantity (or amount) of a given plasma present. It will be appreciated that the amount may be represented as an absolute amount and/or a relative amount. The signal data may comprise a recorded intensity of an emission for a species in the plasma, wherein the recorded intensity may indicate an amount of that species. In particular, the signal may represent a ratio of the amounts of two or more species present in the plasma. The signal data may comprise a ratio of a first recorded intensity of emissions for a first species and a second recorded intensity of emissions for a second species. For example, the signal data may comprise the signal for (or relating to) the plasma gas (such as Argon). Additionally, or alternatively, the signal data may comprise the signal(s) for Nitrogen (an abundant atmospheric gas that is ionized in atmospheric plasma). The signal data may comprise a ratio of the signal for Argon and the signal for Nitrogen. These species will be present in the plasma irrespective of the sample being measured. The instrument data obtained at step 410 may comprise sensor data, either instead of the signal data or in addition to the signal data. The sensor data may comprise output (or readback) from one or more sensors in the sample introduction system. Examples of such sensors may include any of a nebulizer backpressure sensor, a nebulizer flow sensor, a nebulizer flow readback, a cooling gas flow sensor, an RF plasma power sensor or a peristaltic pump speed set.

It will be appreciated that the step of obtaining the signal data may comprise receiving the signal data (directly or indirectly) from the analytical instrument. Additionally, or alternatively the step 410 may comprise retrieving the signal data form a storage (such as the storage 104).

At the step 420 the instrument data is analysed to determine whether the sample introduction system is in a normal state or in a failure state. In an embodiment, the analysis may be based on historical instrument data, wherein the historical instrument data comprises sensor data and signal data. Typically, the historical instrument data comprises data from an analytical instrument coupled to a sample input system in a normal (or non-failure) state and/or from an analytical instrument coupled to a sample input system in a failure state. In particular the historical instrument data may be sorted into at least two labelled bins based on whether the sample introduction system was operating in a normal state or in a failure state when the historical instrument data was recorded. For example, the historical instrument data may have been sorted into "good" (e.g. a normal or non-failure state) and "not good" (e.g. a failure state). There may be further intermediate bins, for example for data that does not fall into either the "good" or "not good" bins.

The step of analysing 420 may comprise comparing the obtained instrument data with the historical instrument date to thereby determine whether the sample introduction system is in a normal state or in a failure state. One or more similarity scores (or metrics) may be calculated between the obtained data and the historical data. In particular similar (typically the most similar) historical data may be identified for the obtained instrument data. The state of the sample introduction system may be determined as the state corresponding to the similar (or most similar) historical data.

In another example a standard sample (of known concentration) may be analysed under "non-failure" states and under "failure" or "close-to-failure" states. The measured intensity of the elements present in the standard under non-failure states is set to be the optimal intensity, so that deviations from said intensities during the "failure" or "close-to-failure" can be used as a proxy to label the historical data (as, for example "good" or "not good" or an optional intermediate category). The deviations from the intensities are usually negative deviations. The "close-to-failure" state may occur when the sample introduction system is soon going to operate in a failure state. The "close-to-failure" state may occur when the sample introduction system is operating in a state that is neither good enough to qualify as normal operation, nor bad enough to qualify as a failure state.

Additionally, or alternatively the step 420 may comprise using one or more machine learning algorithms to determine (or identify) whether the sample introduction system is operating in a normal state or in a failure state, by using historical instrument data as the input for the algorithm, as described shortly below.

The historical data compared with the obtained instrument data, via a machine learning algorithm or otherwise, may comprise data from one or both of the "good" and "not good" bins. In other words, the obtained instrument data may be compared with historical data from a sample introduction system operating in a normal state, or with historical data from a sample introduction system operating in a failure state, or with historical data from a sample introduction system operating in both a normal state and a failure state.

At the step 430 the result of the step 420 of analysing is processed. Step 430 may comprise activating an error procedure in an event that the sample introduction system is operating in a failure state. The error procedure may comprise notifying the user that the sample introduction system is operating in a failure state. Notifying the user may comprise displaying an error message or other visible indication of an error, for example via a display or turning on a light. Notifying the user may comprise turning on an alarm, or sending the user a notification via an electronic message, a computer or a smart phone. Additionally, or alternatively the error procedure may comprise taking an action in an event that the sample introduction system is operating in a failure state. The sample introduction system and/or the analytical instrument may be placed in a safe mode to prevent damage to components of the sample introduction system and/or the analysis system. Placing the sample introduction system and/or the analytical instrument in a safe mode may comprise any one or more of: deactivating one or more components; preventing a sample from entering the nebulizer. In an embodiment, the sample introduction system and/or the analytical instrument may be stopped (or powered down or deactivated). In the examples given above, step 430 comprises taking action only in an event that the sample introduction system is operating in a failure state. Step 430 may comprise notifying a user of the results of the analysis of the instrument data in an event that the sample introduction system is operating in a failure state and/or in an event that the sample introduction system is operating in a normal state. For example, a status may be provided to the user via the user output interface 112. Typically the status is displayed to the user at the analysis instrument or via a separate device. The status comprises an indication of whether the sample introduction system is operating in a normal state or a failure state. In another example, the user may be sent a notification in an event that the sample introduction system is operating in a failure state. An alarm may sound in an event that the sample introduction system is operating in a failure state.

In an embodiment in which one or more machine learning algorithms are used to determine whether the sample introduction system is operating in a normal state or in a failure state, the step 420 may comprise applying a trained classifier (or other trained machine learning algorithm) to the instrument data to determine whether the sample introduction system is in a normal state or in a failure state. The classifier having been trained using historical instrument data such as the labelled historical instrument data. In this way it will be understood that the classifier will typically be trained according to a supervised machine learning approach (or algorithm). Examples of suitable machine learning approaches (or algorithms) include: distance based machine learning techniques (such as the k-nearest neighbours algorithm, the local outlier factor algorithm, etc.); 1-class support vector machines; cluster analysis etc.

In some cases the historical instrument data may solely comprise data from an analytical instrument coupled to a sample input system in a normal (or non-failure) state - i.e. "normal" data. In this way it will be understood that the classifier is trained to identify data that deviates from such normal data, with such data being determined as indicating a failure state of the sample introduction system.

A particularly suitable machine learning approach is the use of an artificial neural network as the classifier. As would be understood by the skilled person neural networks comprise a set of node layers. The set of node layers contain an input layer, one or more hidden layers, and an output layer. Each node connects to another node and is similar to a linear regression model, with its own input data, weights, threshold and output. An input layer is determined, and then the weights are assigned to the nodes to help determine the importance of each variable. A variable with larger weight contributes more to the output than one with a lower weight. The inputs are multiplied by their respective weights, and summed. The output passes through an activation function. In an event that the output of any individual node is above the threshold, the node is activated and data is sent to the next layer of the network. In other words, the output of the activated note becomes the input of the node in the next layer. If the output is below the threshold, no data is sent to the next layer. The weights and other parameters for the neural network are determined using the training process based on the training data set.

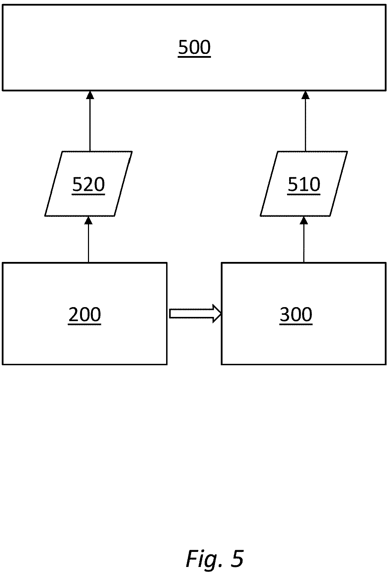

With reference to Figure 5, according to an embodiment of this disclosure a sample introduction system 200 for an inductively coupled plasma analytical instrument is provided that comprises a controller 500 configured to carry out the methods described elsewhere, such as the method 400. The controller 500 is configured to receive and analyse instrument data (comprising signal data 510 from the analytical instrument 300 and optionally sensor data 520 form the sample introduction system 200) to detect a failure of the sample introduction system 200.

The controller 500 may be configured to receive instrument data from the analytical instrument and apply a first trained classifier to the instrument data to detect whether the sample introduction system 200 is operating in a normal state or in a failure state. This is carried out during operation of the analytical instrument. In the event that the sample introduction system is operating in a failure state, the user of the analytical instrument may be notified. The user may be located at the analytical instrument, or may be remote.

The first trained classifier is trained using a first training data set comprising data of the same type as the obtained instrument data, and that corresponds to the normal state and/or the failure state of the sample introduction system. The controller 500 may be configured to train the first trained classifier, or the training may be carried out externally. The first training data set may comprise sets of instrument data corresponding to the normal state of the sample introduction system and to the failure state of the sample introduction system. The failure state of the sample introduction system may comprise any error of the sample introduction system, including but not limited to a leaking sample tube, a clogged nebulizer, a nebulizer flow that deviates from what is expected, a leaking or damaged peristaltic pump tube, or an empty sample vial. The failure state may comprise other issues with the sample tubing, peristaltic pump, nebulizer, spray chamber, plasma torch, or other component.

In the event that the sample introduction system is operating in a failure state, the controller 500 may be arranged to activate an error procedure as set out above. For example, the controller 500 may be arranged to disable (or deactivate or otherwise turn off) one or more components. Additionally, or alternatively, the controller 500 may be arranged to prevent the sample from entering the nebulizer, for example by stopping the peristaltic pump from rotating.

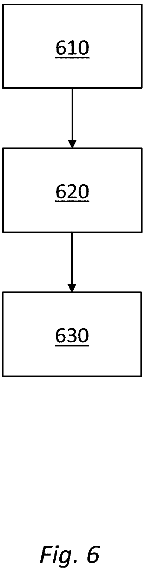

With reference to Figure 6, training the first trained classifier comprises obtaining historical instrument data at step 610. The historical instrument data is sorted into at least two labelled bins at step 620. The labelled bins correspond to the status of the sample introduction system when the historical instrument data was recorded. For example, the labelled bins may comprise two bins, for a normal state and a failure state. At step 630, the first trained classifier is trained.

In an embodiment, the historical instrument data obtained at step 610 is obtained from measurements on the analytical instrument that are set up and controlled to obtain data in a normal state and failure states. The historical instrument data typically comprises signal data and sensor data. As described above, the signal data may comprise spectrometric data that is representative of a property of the plasma. For example, the signal data may comprise a signal measured by the analytical instrument that is sample agnostic. During the data acquisition for training, the measurements may be taken with systematically changed tuning parameters. The measurements may be taken with a range of samples, on a plurality of analytical instruments.

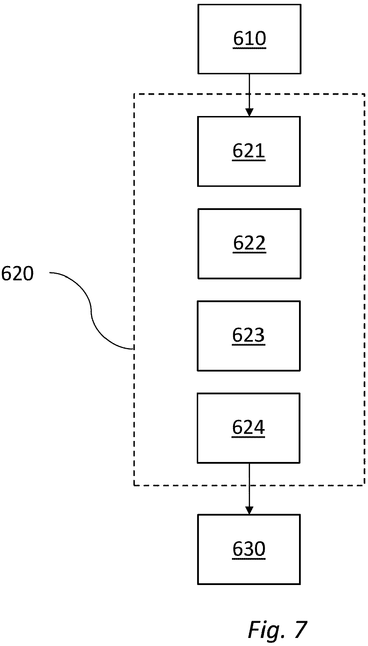

With reference to Figure 7, step 620 of sorting the historical instrument data may comprise pre-processing steps. At step 621, the instrument data may be pre-processed to clean and reduce the instrument data. At step 622, feature extraction or dimensionality reduction may be performed. Step 623 may split the historical instrument data into a training set and a validation set. At step 624, the historical instrument data is sorted into labelled bins. It will be appreciated that steps 621 to 624 may occur in a different order, and that not all of steps 621 to 624 may be carried out. The first trained classifier (or model) is then trained (and may be validated) at step 630, and the parameters may be tuned. The first trained classifier may then be used to detect failure state during use of the analytical instrument. During acquisition of measurements, the instrument data is exported. The instrument data is cleaned and formatted, and the first trained classifier is used to compute a prediction. This prediction is sent to the analytical instrument.

According to a specific embodiment of the present disclosure, signal data acquired at step 610 and used to train and validate the first trained classifier in this embodiment comprises a ratio of intensities of two species that are sample-agnostic. Specifically, the signal generated by the gas that makes up the plasma (Argon) and the signal generated by Nitrogen, Nitrogen being an abundant atmospheric has that is ionized in the atmospheric plasma. Any other intensities are dropped from the signal data used for training and validation.

In this specific embodiment, training the first trained classifier comprises defining functions for data import, and cleaning the data (step 621) by removing spaces and empty columns such that the sensor data includes only sensor readbacks, and the signal data comprises only intensities. A data frame is defined containing all the data. Further cleaning may be carried out to drop inactive readbacks, since some sensors may not be connected to a controller of the analytical instrument and so do not output a readback value.

The measured intensities and sensor readbacks are labelled by separating them into bins or classes. For example, there may be four bins each corresponding to a status of the sample introduction system ("very good", "good", "bad" and "very bad"). An example of separating the measured intensities into bins comprises summing all intensities, and using the sum to create bins grouped by percentile.

The data is prepared for training and validation by making two arrays, X and Y. X contains the features, and Y contains the labels/classes (assigned above). The labels are one-hot encoded. The data is split into training data, used to train a neural network, and testing data, used to test the neural network after training. The testing data is entirely new to the neural network (in other words, the training and testing data are mutually exclusive).

A linear neural network is built for classifying defined categories. The number of layers and their nodes are optimized to improve the accuracy of the classifier. The skilled person would understand the structure of a linear neural network. Various methods of optimizing numbers of layers and nodes will be known to the skilled person. As an example, the initial number of nodes in the hidden layers may be chosen to be (or approximate) the halfway point between the number of input and output units, and/or using other hyperparameter tuning tools such as grid search. The hyperparameters may then be optimized with the aim of increasing the accuracy, and reducing the loss during training time, and seeing a fast decline over the first epochs. The input layer comprises three times the number of labels, and the following layers dimensions are reduced systematically. It will be appreciated that there are a number of activation functions that could be used. As an example, the activation function for the first two fully connected layers may be a rectified linear function. For the last layer a Softmax function (also known as a softargmax function, or a normalized exponential function) may be used (as the prediction on the label is mutually exclusive).

The loss function and optimizer are specified, for example by using a compile function. It will be appreciated that various libraries could be used. One example is the open source library keras available from the Keras SIG at https://keras.io/. The loss function may comprise a categorical cross entropy function, a KL divergence loss unction, a hinge loss function, or another loss function. The optimizer may comprise an Adam optimizer in order to also optimize the learning rate. The Adam optimizer is well known as set out in Kingma, Diederik P., and Jimmy Ba. "Adam: A method for stochastic optimization." arXiv preprint arXiv: 1412.6980 (2014). It will be appreciated that other optimizers could also be used.

Before training the model, the model's performance is checked on test data to ensure that the prediction is unbiased. The model is then trained and validated. The test data is used as validation data and accuracy is checked after every epoch, giving an insight into overfitting at the time of training.

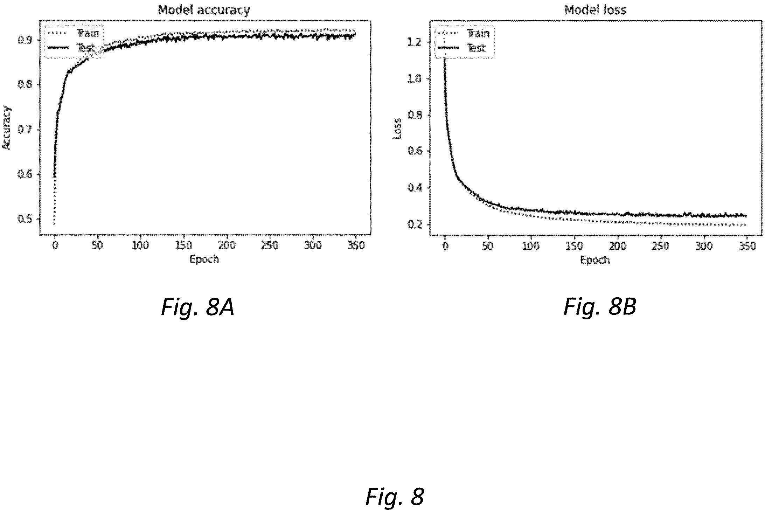

Finally, the model performance is evaluated. With reference to Figure 8, the accuracy (Figure 8A) and loss (Figure 8B) are plotted against epoch (or full optimization passes through the training data) for training data and test data. Accuracy is a metric applied to classification tasks that describes what percentage of the test data is classified correctly. For example, in binary classification, if out of 100 test samples, 95 is classified correctly (i.e. correctly determined if there's a failure or not), then the accuracy is 95%. Loss is a stochastic metric, and is the sum of the difference between 1 and the predicted probability of the real class of the test picture. For binary classification, log loss is used. Figure 8A shows model accuracy plotted against epoch for training data and for test data. Both lines tend towards approximately 0.9 at higher epochs. Figure 8B shows model loss plotted against epoch for training data and for test data. The test data tends towards approximately 0.3 and the training data tends towards approximately 0.2. The training data and test data behave similarly. The accuracy of the test data increases to an acceptable value and the loss behaviour decreases to an acceptable value as the epoch number increases.

In an embodiment, training the first trained classifier may comprise the optional step 622 of dimensionality reduction. Step 622 may comprise selecting the most relevant parameters of the instrument data via a feature engineering step, for example by regularization and/or dimensionality reduction. The most relevant parameters may comprise parameters which provide the most reliable detection of a failure state, or which have the largest difference between the parameter in a normal state and a failure state. A regularization may comprise a Ridge or Lasso regression. A dimensionality reduction may comprise Linear Discriminant Analysis (LDA) or Principal Component Analysis (PCA). Reducing the number of parameters reduces the size of the input layer of the neural network, reducing the size of subsequent layers and therefore reducing numerical effort. Reducing the number of parameters also reduces noise that may otherwise prevent a fast convergence of the loss to a local minimum.

The analytical instrument may comprise an optical emission spectrometry (OES) instruments, or a mass spectrometry (MS) instruments. As described with reference to Figure 2, the signal data may be in the form of subarrays and full frames for OES instruments, and single and survey scans for MS instruments. For full frame signals, training the first trained classifier may comprise a step of image processing in order to find features that are indicative of sample introduction quality, and to determine its effects on plasma chemistry.

It will be appreciated that the methods described have been shown as individual steps carried out in a specific order. However, the skilled person will appreciate that these steps may be combined or carried out in a different order whilst still achieving the desired result. It will be appreciated that embodiments of the invention may be implemented using a variety of different information processing systems. In particular, although the figures and the discussion thereof provide an exemplary computing system and methods, these are presented merely to provide a useful reference in discussing various aspects of the invention. Embodiments of the invention may be carried out on any suitable data processing device, such as a personal computer, laptop, personal digital assistant, mobile telephone, set top box, television, server computer, etc. Of course, the description of the systems and methods has been simplified for purposes of discussion, and they are just one of many different types of system and method that may be used for embodiments of the invention. It will be appreciated that the boundaries between logic blocks are merely illustrative and that alternative embodiments may merge logic blocks or elements, or may impose an alternate decomposition of functionality upon various logic blocks or elements. It will be appreciated that the above-mentioned functionality may be implemented as one or more corresponding modules as hardware and/or software. For example, the above-mentioned functionality may be implemented as one or more software components for execution by a processor of the system. Alternatively, the above-mentioned functionality may be implemented as hardware, such as on one or more field-programmable-gate-arrays (FPGAs), and/or one or more application-specific-integrated-circuits (ASICs), and/or one or more digital-signal-processors (DSPs), and/or other hardware arrangements. Method steps implemented in flowcharts contained herein, or as described above, may each be implemented by corresponding respective modules; multiple method steps implemented in flowcharts contained herein, or as described above, may be implemented together by a single module.

It will be appreciated that, insofar as embodiments of the invention are implemented by a computer program, then a storage medium and a transmission medium carrying the computer program form aspects of the invention. The computer program may have one or more program instructions, or program code, which, when executed by a computer carries out an embodiment of the invention. The term "program" as used herein, may be a sequence of instructions designed for execution on a computer system, and may include a subroutine, a function, a procedure, a module, an object method, an object implementation, an executable application, an applet, a servlet, source code, object code, a shared library, a dynamic linked library, and/or other sequences of instructions designed for execution on a computer system. The storage medium may be a magnetic disc (such as a hard drive or a floppy disc), an optical disc (such as a CD-ROM, a DVD-ROM or a BluRay disc), or a memory (such as a ROM, a RAM, EEPROM, EPROM, Flash memory or a portable/removable memory device), etc. The transmission medium may be a communications signal, a data broadcast, a communications link between two or more computers, etc.

## Claims

1. A method of operating a sample introduction system of an inductively coupled plasma analytical instrument, the method comprising:
applying a trained classifier to instrument data, obtained from the analytical instrument, during operation of the analytical instrument, to detect whether the sample introduction system is operating in a normal state or in a failure state; and
activating an error procedure in the event that the sample introduction system is operating in a failure state;
wherein the instrument data comprises signal data obtained from an analytical measurement made by the analytical instrument; and
wherein the trained classifier is trained using a training data set comprising instrument data corresponding to the normal state of the sample introduction system.

2. The method of claim 1, wherein the sample introduction system comprises one or more sensors, and wherein the instrument data further comprises sensor data comprising outputs from the one or more sensors.

3. The method of claim 1 or 2 wherein the signal data comprises data that is representative of a property of the inductively coupled plasma, wherein optionally the data that is representative of a property of the inductively coupled plasma comprises an amount of a first species present in the plasma.

4. The method of claim 3 wherein the signal data comprises data that is a ratio of the amount of the first species present in the plasma and a second species present in the plasma, wherein optionally the signal data comprises a ratio of the amount of Argon in the plasma and the amount of Nitrogen in the plasma.

5. The method of claims 3 or 4 wherein data that is representative of an amount of a species in the plasma comprises a recorded intensity of the species emissions in the plasma.

6. The method of any preceding claim wherein the signal data comprises spectrometric data.

7. The method of any preceding claim wherein the trained classifier comprises a trained machine learning algorithm, wherein optionally the trained machine learning algorithm comprises a neural network.

8. The method of any preceding claim wherein the training data set further comprises instrument data corresponding to the failure state of the sample introduction system.

9. The method of claim 2, wherein the sensor data comprises data obtained from at least one of:
a nebulizer backpressure sensor;
a nebulizer flow sensor;
a cooling gas flow sensor;
a radio frequency plasma power sensor; and
a peristaltic pump speed sensor.

10. The method of any preceding claim, wherein a first activation function of the trained classifier comprises a rectified linear function and wherein optionally a second activation function of the trained classifier comprises a softmax function.

11. The method of any preceding claim wherein a loss function of the trained classifier comprises a categorical cross entropy function.

12. The method of any preceding claim wherein the error procedure comprises at least one of:
notifying the failure state to a user; and
placing the sample introduction system and/or analytical instrument into a safe mode, wherein optionally the safe mode comprises any of:
stopping the sample introduction system;
stopping one or more components of the sample introduction system; and preventing a sample from entering the nebulizer of the sample introduction system.

13. The method of any preceding claim further comprising generating the trained classifier by performing Adam optimization on an initial classifier using the training data set.

14. An apparatus arranged to carry out a method according to any one of claims 1 to 13.

15. A computer program which, when executed by a processor, causes the processor to carry out a method according to any one of claims 1 to 13.

16. A computer-readable medium storing a computer program according to claim 15.
